# EUROPÄISCHE PATENTSCHRIFT

(11) **EP 2 105 640 B1**
(45) Veröffentlichungstag und Bekanntmachung des Hinweises auf die Patenterteilung: **27.04.2011**
(21) Anmeldenummer: 09156147.2
(22) Anmeldetag: 25.03.2009
(51) Int. Cl.: F16J 15/32, F01D 11/00

(54) **Blattdichtung für Turbomaschine**
Leaf seal for turbomachine
Joint à lames pour turbines

(30) Priorität: 28.03.2008 CH 4592008
(43) Veröffentlichungstag der Anmeldung: 30.09.2009
(73) Patentinhaber: Alstom Technology Ltd, 5400 Baden (CH)
(72) Erfinder: Olmes, Sven, 5234 Villigen (CH); Hurter, Jonas, 5400 Baden (CH)

(56) Entgegenhaltungen:
- EP-A- 0 933 567
- DE-A1-102008 021 117
- US-A1- 2006 208 427

## Beschreibung

### Technisches Gebiet

Die Erfindung betrifft eine Blattdichtung zwecks Abdichtung zwischen Stator und Rotor einer Turbomaschine wie zum Beispiel einer Gasturbine oder eines Kompressors.

### Stand der Technik

Blattdichtungen, auch Lamellendichtungen genannt, werden in Turbomaschinen häufig für die Abdichtung von Spalten zwischen der rotierenden Welle und dem Stator (Gehäuse, Leitschaufeln) eingesetzt, deren radiales Ausmass sich während des Maschinenbetriebs verändert. Blattdichtungen vermögen aufgrund ihrer flexiblen Dichtelemente diese Spalten abzudichten.

Blattdichtungen dieser Art sind beispielsweise aus US 6,343,792 bekannt. Sie bestehen aus einer Mehrzahl von einzelnen metallenen Blättern, die aneinandergereiht und mit vorgegebenem Abstand zwischen den Dichtblättern einen Ring bilden, der am Stator befestigt und um den Rotor der Maschine angeordnet ist. Die Metallblätter stehen dabei in einem Winkel zur Radialen des Rotors, wobei dieser Winkel über die Länge des Blattes entweder gleich ist oder sich leicht verändern kann, die Blätter also leicht gekrümmt sind. Sie besitzen in Umfangsrichtung eine hohe Flexibilität. In der axialen Richtung der Maschine hingegen, d.h. in der Richtung des Druckdifferentials, weisen sie eine hohe Rigidität auf, die es erlaubt einer höheren Druckdifferenz standzuhalten unter Beibehaltung einer radialen Bewegungsfreiheit. Blattdichtungen dieser Art zeichnen sich zudem, im Vergleich zu anderen flexiblen Dichtungen wie Bürstendichtungen, durch einen geringen Reibungswiderstand aus. Dies ist auf einen dynamischen Druck zurückzuführen, der während des Maschinenbetriebs im Bereich der Dichtblätter an der Welle entsteht und die Blätterenden einen minimalen Abstand von der Grössenordnung von Mikrometern abheben lässt und dadurch die Reibung reduziert.

Häufig sind jeweils an der Hochdruckseite sowie an der Niederdruckseite der Dichtblätter eine Endplatte angeordnet. Diese sind axial von den Dichtblättern gemäss Figuren 12 und 13 der US 6,343,792 so beabstandet, um eine reibungsfreie Bewegung der Blätter zu ermöglichen. Die radiale Erstreckung der Endplatten ist dabei ungefähr gleich der der Dichtblätter.

Weitere Blattdichtungen für Turbinen mit Endplatten dieser Art sind beispielsweise in EP 1 231 416 offenbart. Dort weist die Dichtung ein ringförmiges Element 50 auf, das den Abstand zwischen Endplatte und Dichtblättern an der Niederdruck-seite der Dichtblätter aufrechterhält und dadurch die Druckverteilung über der Dichtung vorbestimmt.

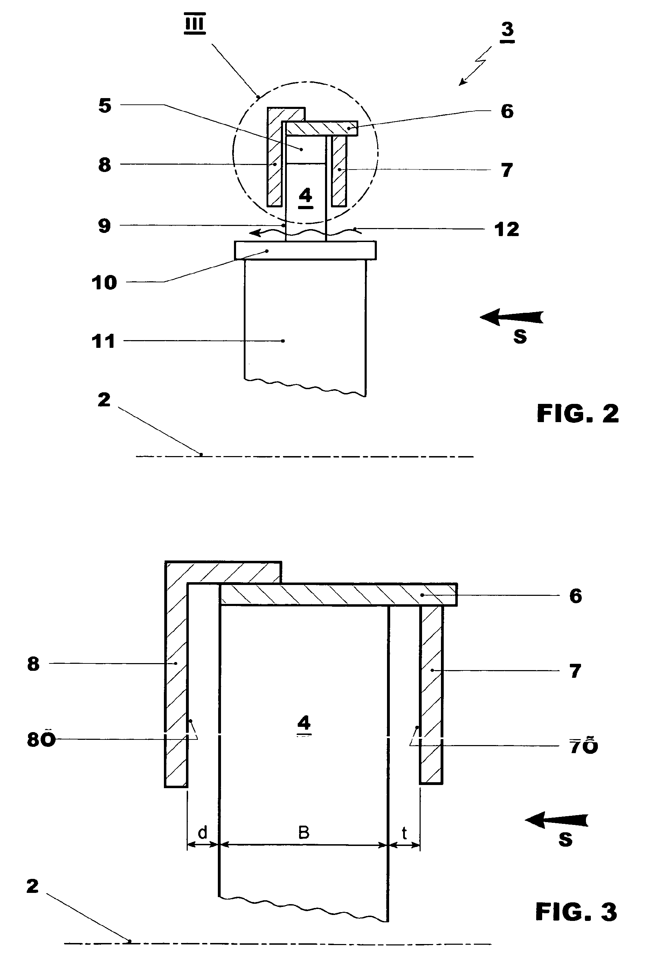

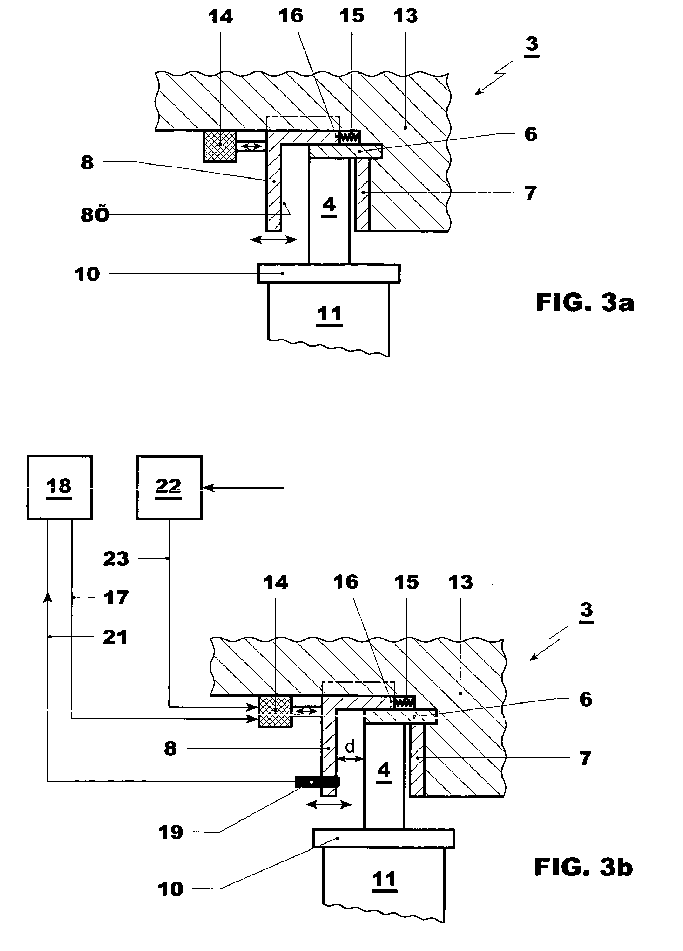

DE 10 2004 020 378 offenbart eine Blattdichtung für eine Turbine und insbesondere eine Beabstandung zwischen den einzelnen Dichtblättern, die einen Luftspalt und einen Luftstrom durch die Dichtung erlaubt, welcher je nach Ausmass des Luftstroms einen sogenannten Blow-down- oder Blow-up-Effekt auslöst. Bei einem Blow-down-Effekt werden die Dichtblätter an die Welle gedrückt, während sie bei einem Blow-up-Effekt von der Welle weg gedrückt werden. Das Ausmass des Luftstroms und das entsprechende Verhalten der Dichtblätter während des Maschinenbetriebs kann durch eine ausgewählte Beabstandung mittels Distanzelementen zwischen den Dichtblättern vorgegeben werden. Zudem kann der Luftstrom auch durch eine ausgewählte und fixierte axiale Beabstandung der Endplatten von den Dichtblättern an der Hochdruckseite und an der Niederdruckseite vorbestimmt werden wie dort in Figur 3 offenbart. Blattdichtungen dieser Art werden typischerweise durch mechanische Techniken wie Festklemmen, Schweissen oder Hartlöten oder einer Kombination dieser Techniken hergestellt.

EP 1 626 210 offenbart eine Blattdichtung dieser Art mit Dichtblättern mit T-förmigem Querschnitt und mit Endplatten auf der Hoch- sowie Niederdruckseite, die je in einer Nut an den Dichtblättern fixiert sind. Die Abstände der Endplatten von den Seiten der Dichtblätter sind dadurch fixiert. Die Endplatte an der Niederdruckseite ist mit einem Absatz ausgebildet, sodass der Abstand zwischen Endplatte und Dichtblatt in einem Bereich nahe dem Rotor grösser ist als in einem Bereich weiter entfernt vom Rotor. Der Abstand an der Niederdruckseite ist jeweils grösser als der Abstand an der Hochdruckseite.

WO 2006/016098 offenbart eine weitere Blattdichtung, bei der die Dichtblätter an ihrem hochdruckseitigen Rand eine radiale Abschrägung aufweisen und eine hochdruckseitige Endplatte an ihrem rotorseitigen Rand einen Vorsprung aufweist, der sich axial zu den Dichtblättern hin erstreckt. Aufgrund der Abschrägung ergibt sich bei Durchbiegung der Dichtblätter eine Vergrösserung des Spaltes zwischen Endplatte und Dichtblättern, sodass sich die aerodynamischen Kräfte entsprechend verändern. Verschiedene Ausführungen weisen für bestimmte Maschinen unterschiedliche, vorbestimmte Abschrägungen auf, die entweder zur Hochdruckseite der Dichtung oder zur Niederdruckseite hinweisen, wobei die axialen Vorsprünge an der Endplatte für bestimmte Maschinen unterschiedliche, vorbestimmte Formen aufweisen.

### Darstellung der Erfindung

Der vorliegenden Erfindung ist die Aufgabe gestellt, eine Blattdichtung zur Dichtung des Radialspalts zwischen Stator und Rotor einer Turbomaschine bereitzustellen, die im Vergleich zu den Blattdichtungen des Standes der Technik über eine verlängerte Betriebslebensdauer verfügt und dadurch eine kostengünstigere Dichtung ermöglicht.

Eine Blattdichtung für eine Turbomaschine zur Abdichtung eines radialen Spaltes zwischen dem Stator und Rotor der Turbomaschine weist eine Mehrzahl von aneinandergereihten und an einem ringförmigen Träger befestigten, metallenen Dichtblättern auf, die konzentrisch um den Umfang eines Rotors der Turbomaschine angeordnet ist. Die Dichtblätter sind dabei in einem Winkel zur Radialen des Rotors und entgegen der Rotationsrichtung hin geneigt angeordnet. Die Dichtung weist zudem eine Vorderplatte und eine Hinterplatte, die mit dem Träger verbunden und sich über den Umfang der Dichtung erstrecken und von der Mehrzahl von Dichtblättern bezüglich dem Rotor der Turbomaschine axial beabstandet sind. Die Vorderplatte befindet sich dabei an der Hochdruckseite und die Hinterplatte an der Niederdruckseite der Dichtungsblätter. Gemäss der Erfindung weist die Blattdichtung eine Vorrichtung auf zu einer, während des Maschinenbetriebs, aktiv gesteuerten Veränderung des axialen Abstands zwischen den Rändern der Dichtblätter und der niederdruckseitigen Hinterplatte.

Die erfindungsgemässe Dichtung ermöglicht durch die Variierung des Abstandes der Hinterplatte von den Dichtungsblättern eine für jeden Betriebszustand der Maschine optimale Einstellung des Blow-down- und Blow-up-Effektes. Dadurch ist für jeden Betriebszustand, sowohl in transienten als auch stationären Betriebszuständen und für die dabei entstehenden, radialen Spaltgrössen eine optimale Dichtungsfunktion gewährleistet, wobei zugleich ein minimaler Verschleiss der Dichtungsblätter, der durch Einreiben der Blätter am Rotor entstehen würde, auf ein minimales Ausmass einstellbar ist. Ein minimaier Verschleiss gewährleistet eine entsprechend optimierte Lebensdauer der Dichtung. Durch die aktive Einstellung des Abstands der Endplatten von den Dichtungsblättern wird für jeden Betriebszustand der Maschine ein optimaler Kompromiss zwischen Dichtungswirkung und Verschleiss der Dichtungsblätter erreicht. Durch den minimierten Verschleiss ist eine erhöhte Betriebslebensdauer gewährleistet, womit die Betriebskosten der Turbomaschine gesenkt werden, indem die Dichtungen, welche durch aufwändige und kostspielige Verfahren hergestellt werden, weniger oft ausgewechselt werden müssen.

Während transienten Betriebszuständen, wie zum Beispiel während dem An- und Herunterfahren der Turbomaschine, ist der Druckabfall über der Dichtung im Verhältnis zum stationären Betrieb klein. Die Dichtungsblätter sind noch nicht in Berührung mit dem Rotor. Bei Erhöhung des Drucks in der Maschine entsteht ein Blow-down-Effekt und eine Berührung mit dem Rotor. Der radiale Spalt wird dabei geschlossen, wobei jedoch eine starke Reibung zwischen den Dichtungsblättern und dem Rotor entsteht. Die Vorrichtung zur aktiven Veränderung des Abstands der niederdruckseitigen Hinterplatte ermöglicht entsprechend dem Betriebszustand eine gezielte Regulierung der Anpresskraft der Dichtblätter am Rotor, indem der Blow-down-Effekt gezielt gemässigt oder ein gezielter Blow-up-Effekt bewirkt wird. Dabei wird die Schliessung des radialen Spaltes aufrechterhalten, jedoch die Reibung der Blätter am Rotor minimiert.

In einer ersten Ausführung der Erfindung weist die Dichtung eine Vorrichtung zur Variierung des Abstands zwischen der Hinterplatte und dem niederdruckseitigen Rand der Dichtungsblätter auf, wobei die Vorrichtung durch Steuersignale aktiviert wird. Mit dieser Massnahme an der Niederdruckseite ist die Wirkung am grössten, weil eine Variierung des Abstands an der Niederdruckseite der Dichtungsblätter bewirkt, dass ein Blow-Down Verhalten der Dichtung alleine initiiert wird.

In einer weiteren Ausführung der Erfindung weist die Dichtung eine Vorrichtung auf zur aktiven Variierung des Abstands zwischen den Dichtblättern und der Hinterplatte und zusätzlich des Abstands zwischen dem hochdruckseitigen Rand der Dichtblätter und der Vorderplatte. Insbesondere werden die Abstände so verändert, dass bei einer Veränderung des einen Abstands der zweite Abstand, abhängig vom ersten Abstand, verändert wird.

In einer spezifischen Ausführung ist die Dichtung und die Vorrichtung zur Veränderung der Abstände derart ausgeführt, dass die Summe des Abstands zwischen Dichtblättern und Hinterplatte und des Abstands zwischen den Dichtblättern und der Vorderplatte stets konstant bleibt. Dies wird beispielsweise durch eine Bügel- oder U-förmige Halterung realisiert, die sich über die Dichtblätter erstreckt und an der sowohl die Vorder- als auch die Hinterplatte befestigt ist. Diese Ausführung hat den besonderen technischen Vorteil in der geringeren Komplexität der Ausführung der Dichtung. Zusätzlich ermöglicht sie, die Dichtung in einem sehr weiten Betriebsbereich zu fahren.

In sämtlichen Ausführungen beträgt der Regelbereich der aktiven Variierung des Abstandes von Null bis circa einem Drittel des axialen Ausmasses der Dichtungsblätter. Bei einem Abstand ab circa einem Drittel und weniger stellt sich der Einfluss auf die Druckverhältnisse in der Dichtung ein. Ausserhalb dieses Bereichs ist der Einfluss auf den Betrieb der Maschine zu klein.

Eine aktive Varllerung des Abstands der Hinterplatte oder der Abstände beider Endplatten lässt sich beispielsweise durch eine pneumatische oder elektromechanische Vorrichtung realisieren.

Um eine möglichst genaue Einstellung des Abstandes und die optimale Funktion der Dichtung bezüglich Lebensdauer und Dichtungsfunktion zu garantieren, weist die Dichtung eine Vorrichtung zur Distanzmessung zwischen Endplatte und dem Rand der Dichtblätter auf sowie eine Leitung zur Übermittlung der Distanz-Messwerte an einen Regelkreis. Der Regelkreis dient dazu, die Abstände der Endplatte oder Endplatten mit vorgegebenen Zielwerten für die Distanz zu vergleichen und gegebenenfalls anzupassen. Diese Zielwerte werden je nach Einbauart der Dichtung, beispielsweise zwischen Gehäuse und Rotor oder zwischen Gehäuse und rotierenden Schaufelspitzen, vorgegeben.

In einer weiteren Ausführung der Erfindung sind die Ränder der Dichtblätter profiliert, sodass die Dichtblätter in einem dem Rotor näheren Bereich weniger breit sind als in einem vom Rotor weiter entfernten und dem Träger näheren Bereich. Dies garantiert einen Mindestabstand zwischen den Dichtblättern und den Endplatten und vermindert das Risiko einer seitlichen Reibung oder gar einer mechanischen Verklemmung.

In einer weiteren Ausführung der erfindungsgemässen Dichtung ist die Dichtung zwischen einem Stator der Turbomaschine und den rotierenden Schaufelspitzen des Rotors angeordnet. Der Spalt zwischen Stator und Schaufelspitzen hat ein ausgeprägt grosses Radialspiel, sodass beim Einsatz einer konventionellen Blattdichtung entweder der Spalt nicht immer geschlossen wird oder ein besonders schneller Verschleiss auftritt. Durch die Anordnung der erfindungsgemässen Dichtung entsteht der besondere Vorteil, dass auch dieser Spalt mit grossem Radialspiel in allen Betriebszuständen geschlossen wird, dies wiederum bei minimiertem Verschleiss und entsprechend erhöhter Betriebslebensdauer. Das radiale Ausmass der Vorder- und Hinterplatte soll angesichts des relativ grossen Bereichs des Radialspiels zwischen Schaufelspitzen und Stator nicht grösser als ein gegebenes Maximalmass aufweisen, sodass bei allen Betriebszuständen ein Spiel zwischen der Vorder- bzw. Hinterplatte und den Schaufelspitzen und damit die volle radiale Bewegungsfreiheit gewährleistet ist, um ein Anstreifen der Platten zu verhindern. Anderseits, ist das minimale radiale Mass der Endplatten so zu bemessen, dass der Bereich abgedeckt wird, der bei einem Anpressen der Dichtblätter zu Lücken zwischen den Dichtblättern führt. Wie bereits erwähnt, kann dies ca. ein Drittel des axialen Ausmasses der Dichtblätter betragen.

### Kürze Beschreibung der Zeichnungen

Figur 1 zeigt eine perspektivische Ansicht einer Blattdichtung in Anordnung zwischen Stator und Rotorschaufelspitzen einer Turbomaschine. Die Figur zeigt eine prinzipielle Grundform einer Blattdichtung, bei der eine Trägerplatte und Vorder- und Hinterplatte in einer allgemeinen Form angeordnet sind.
Figur 2 zeigt einen Querschnitt einer erfindungsgemässen Dichtung gemäss einem Schnitt entlang II-II in Figur 1. Hier sind die Träger-, Vorder- und Hinterplatte gemäss der ersten Ausführung der Erfindung angeordnet.
Figur 3 zeigt ein Detail der erfindungsgemässen Blattdichtung gemäss dem Ausschnitt III wie in Figur 2 angedeutet, insbesondere im Bereich der Dichtblätter und der Hinterplatte.
Figur 3a zeigt die Dichtung von Figur 3 und deren Einbau im Stator einer Turbomaschine.
Figur 3b zeigt eine Dichtung gemäss einer Ausführung der Erfindung mit einem Schema eines Schaltkreises zur Regelung der Dichtung.
Figur 4 zeigt einen Querschnitt einer erfindungsgemässen Dichtung gemäss einem Schnitt entlang II-II in Figur 1. Hier sind Träger, Vorder- und Hinterplatte integral in einer Bügelform ausgeführt.
Figur 5 zeigt einen Querschnitt einer erfindungsgemässen Dichtung in gleicher Ausführung wie in Figur 4, wobei zusätzlich die Dichtblätter profilierte Ränder aufweisen.

Gleiche Bezugszeichen in den verschiedenen Figuren deuten auf jeweils die gleichen Bestandteile hin.

### Ausführung der Erfindung

Folgende Ausführungsbeispiele sind in verschiedenen Turbomaschinen anwendbar, wie zum Beispiel Gasturbinen, Kompressoren, Dampfturbinen.

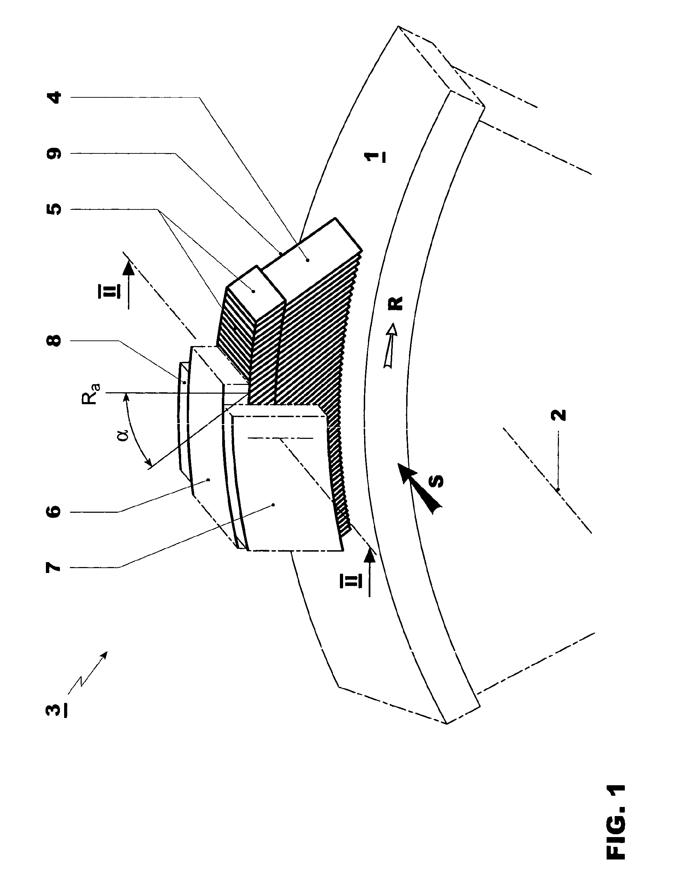

Figur 1 zeigt einen Rotor 1 einer Turbomaschine, beispielsweise eine Gasturbine oder Kompressor, wobei der Rotor 1 in der Richtung R um eine Rotorachse 2 rotiert. Ein nicht dargestellter Stator umschliesst den Rotor der Maschine, wobei an dem Stator eine Dichtung 3 befestigt ist, die einen radialen Spalt zwischen Stator und Rotor 1 schliessen kann. Der Spalt besitzt ein Ausmass in der radialen Richtung Ra, das sich während des transienten Betriebs der Maschine, insbesondere während des Hoch- und Herunterfahrens sowie bei Lastwechsel, verändern kann. Die Abdichtung des Spaltes zwischen Stator und Rotor verhindert eine Leckage des Stroms eines Arbeitsfluids, das in Richtung des mit S bezeichneten Pfeils strömt. Die Dichtung 3 ist eine Blattdichtung und weist eine Mehrzahl von Dichtblättern 4 auf, die in einem Winkel α zur Radialen Ra und entgegen der Rotationsrichtung R des Rotors geneigt angeordnet sind. Zwischen den einzelnen Dichtblättern 4 ist jeweils ein Distanzelement 5 angeordnet. Die Dichtblätter 4 sind an einem Träger 6 am Stator beispielsweise mittels Schweissen befestigt. Der Träger 6 und die daran befestigte Reihe von Dichtungs-blättern 4 erstrecken sich ringförmig und konzentrisch über den Umfang des Rotors 1. Am Träger 6 ist zudem an der Hochdruckseite der Dichtung 3 eine Vorderplatte 7 und an der Niederdruckseite der Dichtung 3 eine Hinterplatte 8 angeordnet.

Die Dichtung 3 kann entweder zwischen einem Stator und einer Welle oder zwischen Stator und den Spitzen von Rotorschaufeln angeordnet sein. Entsprechend den Druckverhältnissen ergeben sich an den Dichtblättern 4 einen Blow-up- oder Blow-down-Effekt, wonach die Dichtblätter vom Rotor 1 weg gedrückt bzw. zum Rotor 1 hin gedrückt werden. Bei einem starken Blow-down-Effekt erhöht sich die Anpresskraft der Dichtblätter 4 auf die Rotoroberfläche und somit die Dichtwirkung, sodass der Spalt geschlossen wird, wobei zugleich auch die Reibung und der Verschleiss der Dichtblätter erhöht wird. Bei einem Blow-up-Effekt hingegen, vermindert sich die Anpresskraft und Dichtwirkung, wobei die Reibung ebenfalls vermindert wird. Gemäss der Erfindung weist die Dichtung eine Vorrichtung zur aktiv gesteuerten Veränderung des axialen Spaltes zwischen der Hinterplatte 8 und dem niederdruckseitigen Rand 9 der Dichtblätter 4 zur Regulierung des Blow-up- oder Blow-down-Effektes wie in Figuren 2, 3, 3a und 3b gezeigt.

Figuren 2 und 3 zeigen eine Dichtung gemäss der Erfindung mit einem der Dichtblätter 4 und hochdruckseitiger Vorderplatte 7, niederdruckseitiger Hinterplatte 8 und Trägerring 6. Die dargestellte Dichtung 3 ist zwischen einem nicht dargestellten Stator und der Schaufelspitze 10 einer Turbinenlaufschaufel 11 oder Kompressorschaufel angeordnet. Ein Leckagestrom, der bei nicht vollständig geschlossenem Spalt zwischen Stator und Rotor entsteht, ist mit dem Pfeil 12 angedeutet. Zwischen der niederdruckseitigen Hinterplatte 8, insbesondere dem inneren Rand 8' und dem Rand 9 der Dichtblätter 4, besteht ein Spalt oder erster axialer Abstand von Breite d, der gemäss dem Betriebszustand der Turbine variiert werden kann. Ein zweiter axialer Abstand von einer Breite t besteht zwischen dem hochdruckseitigen Rand der Dichtblätter 4 und der Vorderplatte 7. Figur 3a zeigt die Dichtung von Figur 3, bei der Träger 6 und Vorderplatte 7 beispielsweise als ein integraler Teil des Stators 13 sind. Der Spalt zwischen Rand 8' der Hinterplatte und des Dichtungsblattes 4 wird beispielsweise durch eine pneumatische oder elektromechanische Vorrichtung 14 variiert. Dabei kann eine Mindestbreite des Spaltes mittels einer Feder 15 zwischen dem axialen Ende 16 des Hinterplattenelementes 8 und dem Stator 13 gewährleistet werden.

In einer Ausführung der Erfindung ist die Vorrichtung 14 so ausgelegt, dass die Spaltbreite d von Null bis einem Drittel des axialen Ausmasses oder der Breite B der Dichtungsblätter während des Maschinenbetriebs variiert werden kann.

Die Vorderplatte 7 ist an der Hochdruckseite der Dichtblätter 4 befestigt, wobei zwischen der inneren Wand 7' der Vorderplatte 7 und den Rändern der Dichtungsblätter 4 ein Spalt von Breite t besteht. In einer Ausführung der Dichtung ist diese Breite fixiert. Dabei ist die Breite d des Spaltes an der Hinterplatte stets kleiner als die Spaltbreite t.

In der Hinterplatte 8 ist gemäss einer weiteren Ausführung der Dichtung 3, wie in Figur 3b gezeigt, in der Hinterplatte 8 ein Sensor 19 zur Messung der Spaltbreite d integriert. Von diesem führt eine Signalleitung 21 zu einer Regeleinheit 18. Diese weist Mittel auf zum Vergleich der gemessenen Spaltbreite d mit einem vorbestimmten Zielwert für die Spaltbreite sowie zur Generierung eines Regelsignals zur Anpassung der Spaltbreite d. Die Regelsignale aus Einheit 18 werden mittels Signalleitung 17 an die Vorrichtung 14 zur Verschiebung der Hinterplatte relativ zu den Dichtblättern übermittelt. Der Sensor 19 zur Distanzmessung der Spaltbreite d dient zudem dazu, eine Verringerung des Spaltes auf Null zu verhindern und Reibung des Dichtblattrandes an der Endplatte zu minimieren. Zudem können Signale aus der Turbomaschine, wie zum Beispiel ein Tripsignal aus Einheit 22, über Signalleitung 23 an die Verschiebungsvorrichtung 14 gesendet werden. Ein solches Tripsignal kann eine Verschiebung der Hinterplatte 8 zu einer Position mit maximalem Abstand d auslösen.

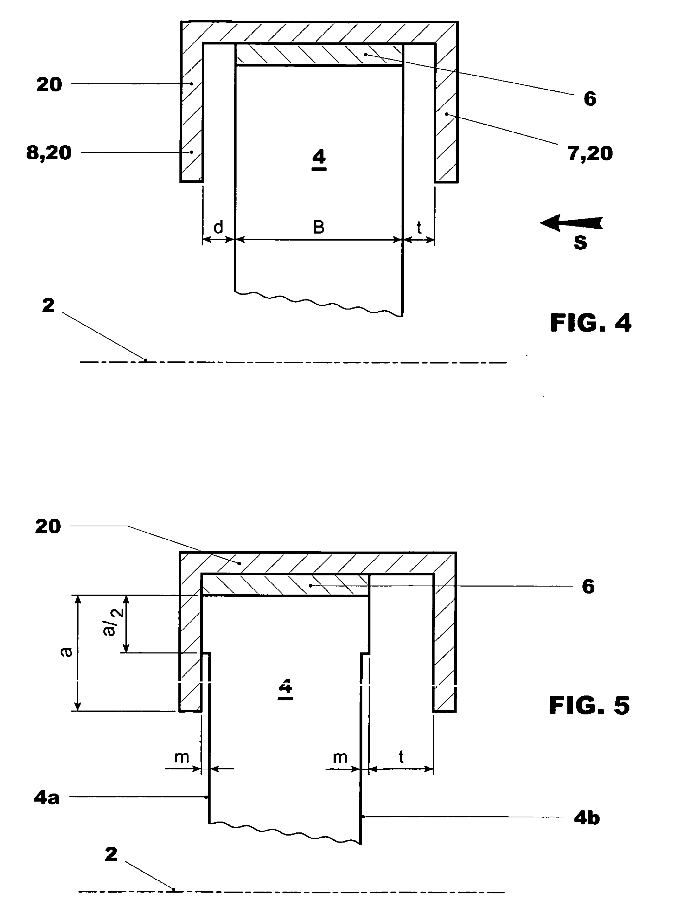

Figur 4 zeigt eine weitere Ausführung der Hinterplatte und Vorderplatte in einer Ausführung eines integralen Teiles 20, der eine gleichzeitige Verschiebung der Vorder- und Hinterplatte ermöglicht, wobei die Summe des Spaltes zwischen Dichtblättern und Hinterplatte und des Spaltes zwischen Dichtblättern und Vorderplatte stets konstant bleibt. Die Endplatten sind hierzu als integraler Teil 20 mit einem bügelförmigen oder U-förmigen Querschnitt gefertigt. Eine axiale Bewegung des Teils 20 relativ zu den Dichtblättern 4 wird entweder durch eine Befestigung der Dichtblätter am Stator und einer Vorrichtung zur Verschiebung des Teils 20 realisiert. Hierzu können beispielsweise die Dichtblätter zusammen mit ihrem Träger 6 mittels mehreren Durchführungen, die durch Öffnungen durch das Teil 20 führen, mit dem Stator verbunden sein.

Alternativ kann die axiale Bewegung des Teils 20 relativ zu den Dichtblättern 4 mittels einer fixen Befestigung des Teils 20 am Stator realisiert werden, wobei die Dichtblätter 4 und Träger 6 mittels Durchführungen und entsprechenden Führungsöffnungen im Teil 20 axial verschoben werden.

Die gleichzeitige Variierung ermöglicht die volle Ausschöpfung des Blow-up und des Blow-Down Potentials der Dichtung. Zudem können Zustände dazwischen stufenlos eingestellt werden und die Kraft auf die Metallblätter gezielt angefahren werden. Bei besonderen Betriebszuständen der Turbine, wie zum Beispiel einem Trip, könnte die Dichtung sofort in maximales Blow-Up-Verhalten gebracht werden und ein Anstreifen verhindern, da hier die Zustände entstehen können, die zu einem maximalen radialen Einfahren in die Dichtung führen. In einem weiteren Betriebszustand, einem sogenannten "hot restart", wird ein Maximum an radialer Bewegung abverlangt, was die Dichtung am Besten übersteht, wenn sie in einer Blow-up Konfiguration gefahren wird.

Eine weitere Ausführung der Dichtung 3, wie in Figur 5 gezeigt, weist im wesentlichen den gleichen Aufbau der Dichtung von Figur 4 auf bezüglich der Anordnung der Hinter- und Vorderplatte. Zusätzlich weisen hier die Dichtblätter 4 ein Profil an den nieder- und hochdruckseitigen Rändern 4a bzw. 4b der Dichtblätter 4 auf. Insbesondere ist das Profil so ausgeführt, dass im Bereich der Endplatten nur ein Teil des Randes der Dichtblätter in Kontakt mit der Endplatte kommen kann und über den übrigen Teil des Randes ein kleiner Spalt mit Breite m garantiert vorhanden ist. Beispielsweise erstreckt sich die Verkleinerung der Breite des Dichtblattes 4 über einen Bereich a/2 oder die Hälfte des Bereichs a der Dichtblätter, der von den Endplatten bedeckt wird. Der minimale Absatz entlang der Ränder 4a und 4b hat eine Breite m von beispielsweise 0.2 mm oder einem Ausmass, das eine Reibung der Dichtblätter an den Endplatte vermeiden würde. Die maximale Spaltbreite t beträgt beispielsweise 2 mm, oder circa einem Drittel der Breite oder des axialen Ausmasses B der Dichtungsblätter.

### Bezugszeichenliste

- 1: Rotor
- 2: Rotorachse
- 3: Dichtung
- 4: Dichtblätter
- 4a, 4b: seitliches Profil der Dichtblätter
- 5: Distanzelemente
- 6: Träger
- 7: Vorderplatte
- 7': innere Oberfläche der Vorderplatte
- 8: Hinterplatte
- 8': innere Oberfläche der Hinterplatte
- 9: Rand des Dichtblattes
- 10: Schaufelspitze
- 11: Schaufel
- 12: Leckagestrom
- 13: Stator
- 14: Verschiebungsvorrichtung
- 15: Feder
- 16: Ende des Hinterplattenelementes 8
- 17: Signalleitung
- 18: Regeleinheit
- 19: Sensor
- 20: integrales Teil für Vorder- und Hinterplatte
- 21: Signalleitung
- 22: Regeleinheit
- 23: Signalleitung
- R: Rotationsrichtung des Rotors
- Ra: Radiale zur Rotorachse
- S: Strömungsrichtung des Arbeitsfluids
- α: Anstellwinkel der Dichtblätter zur Radialen Ra
- t, d: Spaltbreite zwischen Dichtblätter und Vorder- bzw. Hinterplatte
- B: Breite der Dichtblätter
- m: Breite des Absatzes am Profil der Dichtblätter
- a: Länge der Endplatten über den Dichtblättern

## Patentansprüche

1. Eine Blattdichtung (3) zur Dichtung eines Radialspalts zwischen Stator und Rotor (1) einer Turbomaschine weist eine Mehrzahl von aneinandergereihten und
an einem Träger (6) befestigten, metallenen Dichtblättern (4) auf, die in eingebautem Zustand konzentrisch um den Umfang des Rotors (1) der Turbomaschine angeordnet ist und in einem Winkel (α) zur Radialen (Ra) des Rotors (1) und entgegen der Rotationsrichtung (R) hin geneigt angeordnet ist, wobei die Dichtung (3) eine Vorderplatte (7) und
eine Hinterplatte (8) aufweist, die mit dem Träger (6) verbunden sind und sich beidseits der Dichtblätter (4) über den Umfang der Dichtung (3) erstrecken und
ein erster axialer Abstand (d) zwischen der Hinterplatte (8) und den Dichtblättern (4) und ein zweiter axialer Abstand (t) zwischen der Vorderplatte (7) und den Dichtblättern (4) besteht
**dadurch gekennzeichnet, dass**
die Dichtung (3) eine Vorrichtung zu einer, während des Betriebs der Turbomaschine, aktiv gesteuerten Veränderung des ersten axialen Abstands (d) zwischen den Dichtblättern (4) und der Hinterplatte (8) aufweist.

2. Dichtung (3) nach Anspruch 1
**dadurch gekennzeichnet, dass**
die Dichtung (3) eine Vorrichtung aufweist zur gesteuerten Veränderung der axialen Abstände (d, t) von sowohl zwischen der Vorderplatte (7) und den Dichtblättern (4) als auch zwischen der Hinterplatte (8) und den Dichtblättern (4) in einer voneinander abhängigen Bewegung.

3. Dichtung (3) nach Anspruch 2
**dadurch gekennzeichnet, dass**
die Summe des ersten axialen Abstands (d) zwischen der Hinterplatte (8) und den Dichtblättern (4) und des zweiten axialen Abstands (t) zwischen der Vorderplatte (7) und den Dichtblättern (4) stets konstant ist.

4. Dichtung (3) nach einem der vorangehenden Ansprüche **dadurch gekennzeichnet, dass**
die Vorrichtung zur gesteuerten Veränderung der axialen Abstände (d, t) eine pneumatische oder elektromechanische Vorrichtung ist.

5. Dichtung (3) nach Anspruch 3
**dadurch gekennzeichnet, dass**
die Vorderplatte (7) und die Hinterplatte (8) an einer Halterung (20) befestigt sind oder die Vorder- und Hinterplatte (7, 8) zusammen mit einer Halterung (20) eine integrales Teil bilden, wobei die Halterung (20) sich über den Träger (6) der Dichtblätter (4) erstreckt.

6. Dichtung (3) nach einem der vorangehenden Ansprüche
**dadurch gekennzeichnet, dass**
ein Regelbereich der gesteuerten Veränderung des Abstandes (d) zwischen der Hinterplatte (8) und den Dichtblättern (4) von Null bis zu circa einem Drittel des axialen Ausmasses (B) der Dichtungsblätter (4) reicht.

7. Dichtung (3) nach einem der vorangehenden Ansprüche
**dadurch gekennzeichnet, dass**
die Dichtung (3) einen Sensor (19) zur Messung der Distanz zwischen der Hinterplatte (8) und den Dichtblättern (4) und eine Leitung (21) zur Übermittlung von Distanz-Messwerten zu einer Regeleinheit (18) zur Anpassung des Abstands (d) zwischen der Hinterplatte (8) und den Dichtblättern (4) aufweist.

8. Dichtung (3) nach einem der vorangehenden Ansprüche
**dadurch gekennzeichnet, dass**
die Ränder (4a, 4b) der Dichtblätter (4) ein Profil mit einem Absatz im Bereich der Hinter- und Vorderplatte (7, 8) aufweisen.

9. Turbomaschine mit einem Stator und einem Rotor (1) und einer Blattdichtung (3) nach einem der vorangehenden Ansprüche
**dadurch gekennzeichnet, dass**
die Blattdichtung (3) zwischen Stator und rotierenden Schaufelspitzen (10) der
Turbomaschine angeordnet ist.

## Claims

1. Leaf seal (3) for sealing a radial gap between a stator and rotor (1) of a turbomachine has a plurality of metallic sealing leaves (4), which are arranged in a row, and are attached to a carrier (6), and when installed are arranged concentrically around the circumference of the rotor (1) of the turbomachine and is arranged inclined at an angle (α) to the radial direction (Ra) of the rotor (1) and in the opposite direction to the rotation direction (R), with the seal (3) having a front plate (7) and a rear plate (8) which are connected to the carrier (6) and extend over the circumference of the seal (3) on both sides of the sealing leaves (4), and a first axial distance (d) exists between the rear plate (8) and the sealing leaves (4), and a second axial distance (t) exists between the front plate (7) and the sealing leaves (4), **characterized in that**
the seal (3) has an apparatus for actively controlled variation, during the operation of the turbomachine, of the first axial distance (d) between the sealing leaves (4) and the rear plate (8).

2. Seal (3) according to Claim 1,
**characterized in that**
the seal (3) has an apparatus for controlled variation of the axial distances (d, t) both between the front plate (7) and the sealing leaves (4) and between the rear plate (8) and the sealing leaves (4) in a mutually dependent movement.

3. Seal (3) according to Claim 2,
**characterized in that**
the sum of the first axial distance (d) between the rear plate (8) and the sealing leaves (4) and of the second axial distance (t) between the front plate (7) and the sealing leaves (4) is always constant.

4. Seal (3) according to one of the preceding claims, **characterized in that**
the apparatus for controlled variation of the axial distances (d, t) is pneumatic or electromechanical apparatus.

5. Seal (3) according to Claim 3,
**characterized in that**
the front plate (7) and the rear plate (8) are attached to a holder (20), or the front plate (7) and the rear plate (8) together with a holder (20) form an integral part, with the holder (20) extending over the carrier (6) of the sealing leaves (4).

6. Seal (3) according to one of the preceding claims, **characterized in that**
a control range of the controlled variation of the distance (d) between the rear plate (8) and the sealing leaves (4) extends from zero to about one third of the axial extent (B) of the sealing leaves (4).

7. Seal (3) according to one of the preceding claims, **characterized in that**
the seal (3) has a sensor (19) for measurement of the distance between the rear plate (8) and the sealing leaves (4), and a line (21) for transmission of distance measured values to a control unit (18) for adaptation of the distance (d) between the rear plate (8) and the sealing leaves (4).

8. Seal (3) according to one of the preceding claims, **characterized in that**
the edges (4a, 4b) of the sealing leaves (4) have a profile with a step in the area of the rear plate (7) and front plate (8).

9. Turbomachine having a stator and a rotor (1) and a leaf seal (3) according to one of the preceding claims, **characterized in that**
the leaf seal (3) is arranged between stator and rotating blade tips (10) of the turbomachine.

## Revendications

1. Joint à lames (3) destiné à l'étanchéité d'une fente radiale entre un stator et un rotor (1) d'une turbomachine, présentant une multiplicité de lames d'étanchéité métalliques (4) rangées l'une derrière l'autre et fixées à un support (6) qui, à l'état monté, sont disposées de manière concentrique autour du pourtour du rotor (1) de la turbomachine et qui sont disposées avec une inclinaison d'un angle (α) par rapport à la radiale (Ra) du rotor (1) et à l'inverse du sens de rotation (R), le joint (3) présentant une plaque avant (7) et une plaque arrière (8), qui sont reliées avec le support (6) et qui s'étendent sur le pourtour du joint (3) de part et d'autre des lames d'étanchéité (4), et il existe une première distance axiale (d) entre la plaque arrière (8) et les lames d'étanchéité (4) et une deuxième distance axiale (t) entre la plaque avant (7) et les lames d'étanchéité (4), **caractérisé en ce que** le joint (3) présente un dispositif destiné à changer par une commande active la première distance axiale (d) entre les lames d'étanchéité (4) et la plaque arrière (8) pendant le fonctionnement de la turbomachine.

2. Joint (3) selon la revendication 1, **caractérisé en ce que** le joint (3) présente un dispositif pour le changement commandé des distances axiales (d, t) aussi bien entre la plaque avant (7) et les lames d'étanchéité (4) qu'entre la plaque arrière (8) et les lames d'étanchéité (4) en un mouvement interdépendant.

3. Joint (3) selon la revendication 2, **caractérisé en ce que** la somme de la première distance axiale (d) entre la plaque arrière (8) et les lames d'étanchéité (4) et de la deuxième distance axiale (t) entre la plaque avant (7) et les lames d'étanchéité (4) est toujours constante.

4. Joint (3) selon l'une quelconque des revendications précédentes, **caractérisé en ce que** le dispositif pour le changement commandé des distances axiales (d, t) est un dispositif pneumatique ou électromécanique.

5. Joint (3) selon la revendication 3, **caractérisé en ce que** la plaque avant (7) et la plaque arrière (8) sont fixées à une monture (20) ou les plaques avant et arrière (7, 8) forment avec une monture (20) une pièce intégrale, la monture (20) s'étendant au-dessus du support (6) des lames d'étanchéité (4).

6. Joint (3) selon l'une quelconque des revendications précédentes, **caractérisé en ce qu'**une plage de régulation du changement commandé de la distance (d) entre la plaque arrière (8) et les lames d'étanchéité (4) s'étend de zéro à environ un tiers de la dimension axiale (B) des lames d'étanchéité (4).

7. Joint (3) selon l'une quelconque des revendications précédentes, **caractérisé en ce que** le joint (3) présente un capteur (19) pour la mesure de la distance entre la plaque arrière (8) et les lames d'étanchéité (4) et une ligne (21) pour la transmission de valeurs de mesure de distance à une unité de régulation (18) pour adapter la distance (d) entre la plaque arrière (8) et les lames d'étanchéité (4).

8. Joint (3) selon l'une quelconque des revendications précédentes, **caractérisé en ce que** les bords (4a, 4b) des lames d'étanchéité (4) présentent un profil avec un retrait dans la région des plaques avant et arrière (7, 8).

9. Turbomachine avec un stator et un rotor (1) et un joint à lames (3) selon l'une quelconque des revendications précédentes, **caractérisée en ce que** le joint à lames (3) est disposé entre le stator et les pointes d'aubes tournantes (10) de la turbomachine.
